(19) **Europäisches Patentamt**

**European Patent Office**

**Office européen des brevets**

(11) **EP 0 692 006 B2**

(12) **NEUE EUROPÄISCHE PATENTSCHRIFT**

(45) Veröffentlichungstag und Bekanntmachung des Hinweises auf die Entscheidung über den Einspruch:
**12.12.2001 Patentblatt 2001/50**

(45) Hinweis auf die Patenterteilung:
**24.06.1998 Patentblatt 1998/26**

(21) Anmeldenummer: **94911899.6**

(22) Anmeldetag: **16.03.1994**

(51) Int Cl.$^7$: **C09D 133/06**, C09D 5/04, B05D 7/26

(86) Internationale Anmeldenummer:
**PCT/EP94/00828**

(87) Internationale Veröffentlichungsnummer:
**WO 94/22968 (13.10.1994 Gazette 1994/23)**

(54) **NICHTWÄSSRIGER THIXOTROPIERTER LACK UND VERFAHREN ZUR HERSTELLUNG MEHRSCHICHTIGER ÜBERZÜGE DAMIT**

NON-AQUEOUS THIXOTROPED PAINT AND METHOD OF PRODUCING MULTILAYER COATINGS WITH THIS PAINT

PEINTURE NON AQUEUSE THIXOTROPEE ET PROCEDE DE REALISATION DE REVETEMENTS MULTICOUCHES AVEC CETTE PEINTURE

(84) Benannte Vertragsstaaten:
**AT BE DE ES FR GB IT NL SE**

(30) Priorität: **31.03.1993 DE 4310413**

(43) Veröffentlichungstag der Anmeldung:
**17.01.1996 Patentblatt 1996/03**

(73) Patentinhaber: **BASF Coatings Aktiengesellschaft**
**48165 Münster (DE)**

(72) Erfinder:
• **RÖCKRATH, Ulrike**
**D-48308 Senden (DE)**
• **POTH, Ulrich**
**D-48163 Münster (DE)**

(74) Vertreter: **Münch, Volker, Dr. et al**
**Dres. Fitzner & Münch**
**Rechts- und Patentanwälte**
**Lintorfer Strasse 10**
**40878 Ratingen (DE)**

(56) Entgegenhaltungen:
| | |
|---|---|
| **EP-A- 0 192 304** | **EP-A- 0 261 863** |
| **DE-A- 1 805 693** | **DE-A- 2 751 761** |
| **DE-A- 3 724 555** | **US-A- 4 311 622** |
| **US-A- 4 960 828** | **US-A- 4 965 317** |

• **Setalux Datasheets I-III, IVa, IVb, Va-Vd**
• **Datasheet AKZO, Zr/Aug. 88**

**Beschreibung**

Die Erfindung betrifft einen nichtwäßrigen Lack, der ein Polyacrylatharz und ein harnstoffgruppenhaltiges Thixotropierungsmittel enthält sowie ein Verfahren zur Herstellung einer zweischichtigen Decklackierung auf einer Substratoberfläche.

Verfahren zur Herstellung einer zweischichtigen Decklackierung auf einer Substratoberfläche, bei dem

  (1) ein pigmentierter Basislack auf die Substratoberfläche aufgebracht wird

  (2) der in Stufe (1) aufgebrachte Basislackfilm bei Temperaturen von Raumtemperatur bis 80°C getrocknet wird

  (3) auf den in Stufe (2) getrockneten Basislackfilm ein transparenter Decklack aufgebracht wird und anschließend

  (4) Basislackschicht und Decklackschicht zusammen eingebrannt werden,

sind bekannt.

Nichtwäßrige Lacke, die ein Polyacrylatharz und ein hamstoffgruppenhaltiges Thixotropierungsmittel enthalten, sind bekannt und werden beispielsweise in der europäischen Patentanmeldung EP-A-192 304, der deutschen Offenlegungsschrift DE 23 59 929, in den deutschen Auslegeschriften DE 23 59 923 und DE 18 05 693 sowie in der deutschen Patentschrift DE 27 51 761 beschrieben. Mit dem Einsatz von Thixotropierungsmitteln in nichtwäßrigen Lacken soll unter anderem die Applikation von relativ dicken Lackschichten ermöglicht werden, ohne daß es zu störenden "Läuferbildungen" kommt. Nachteiligerweise liefern nichtwäßrige Lacke, die ein Polyacrylatharz und ein harnstoffgruppenhaltiges Thixotropierungsmittel enthalten, insbesondere bei hohen Feststoffgehalten, Lackoberflächen, die hinsichtlich ihres optischen Erscheinungsbildes, insbesondere hinsichtlich Verlauf und Glanz unbefriedigend sind.

Der Erfindung liegt daher die Aufgabe zugrunde, nichtwäßrige Lacke, die ein Polyacrylatharz und ein hamstoffgruppenhaltiges Thixotropierungsmittel enthalten, bereitzustellen, welche Lackfilme mit gegenüber dem Stand der Technik verbesserten Oberflächeneigenschaften liefern.

Diese Aufgabe wurde überraschenderweise durch Bereitstellung von nichtwäßrigen Lacken, die ein Polyacrylatharz und ein hamstoffgruppenhaltiges Thixotropierungsmittel, das durch Umsetzung eines Monoamins oder einer Mischung aus Monoaminen mit einem Polyisocyanat oder einer Mischung aus Polyisocyanaten herstellbar ist, enthalten, gelöst, wobei das Monoamin und das Polyisocyanat bzw. die Mischung aus Polyisocyanaten in einer solchen Menge miteinander umgesetzt werden, daß das Äquivalentverhältnis zwischen Aminogruppen und Isocyanatgruppen zwischen 1,2 und 0,4 liegt und als Polyisocyanat Tetramethylen-1,4-diisocyanat, Hexamethylen-1,6-diisocyanat, ω,ω-Dipropylätherdiisocyanat, Cyclohexyl-1,4-diisocyanat, Dicyclohexylmethan-4,4'-diisocyanat, 1,5-Dimethyl-(2,4-ω-diisocyanato-methyl)-benzol, 1,5-Dimethyl-(2,4-ω-diisocyanato-ethyl)-benzol, 13,5-Trimethyl-(2,4-ω-diisocyanato-methyl)-benzol, 1,3,5-Triethyl-(2,4-ω-diisocyanato-methyl)-benzol, trimeres Hexamethylen-1,6-diisocyanat, Isophorondiisocyanat, Dicyclohexyldimethylmethan-4,4'-diisocyanat, 2,4-Toluoldiisocyanat, 2,6-Toluoldiisocyanat oder Diphenylmethan-4,4'-diisocyanat oder eine Mischung aus diesen Polyisocyanaten eingesetzt wird und wobei als Monoamine aliphatische primäre Monoamine mit mindestens 6 C-Atomen im Molekül eingesetzt werden und wobei das Polyacrylatharz herstellbar ist, indem

  (a) 16 bis 51, vorzugsweise 16 bis 28 Gew.-% eines hydroxylgruppenhaltigen Esters der Acrylsäure oder Methacrylsäure oder eines Gemisches aus solchen Monomeren

  (b) 32 bis 84, vorzugsweise 32 bis 63 Gew.-% eines von (a) verschiedenen aliphatischen oder cycloaliphatischen Esters der Acrylsäure oder Methacrylsäure mit mindestens 4 C-Atomen im Alkoholrest oder eines Gemisches aus solchen Monomeren,

  (c) 0 bis 2, vorzugsweise 0 bis 1 Gew.-% einer ethylenisch ungesättigten Carbonsäure oder einer Mischung aus ethylenisch ungesättigten Carbonsäuren und

  (d) 0 bis 30, vorzugsweise 0 bis 20 Gew.-% eines von (a), (b) und (c) verschiedenen ethylenisch ungesättigten Monomeren oder eines Gemisches aus solchen Monomeren

zu einem Polyacrylatharz mit einer Säurezahl von 0 bis 15, vorzugsweise 0 bis 8, einer Hydroxylzahl von 80 bis 140, vorzugsweise 80 bis 120 und einem zahlenmittleren Molekulargewicht von 1.500 bis 10.000, vorzugsweise 2.000 bis 5.000 polymerisiert werden, wobei die Summe der Gewichtsanteile der Komponenten (a), (b), (c) und (d) stets 100 Gew.-% ergibt.

Die Herstellung der erfindungsgemäß eingesetzten Polyacrylatharze kann nach allgemein gut bekannten Polymerisationsverfahren erfolgan. Polymerisationsverfahren zur Herstellung von Polyacrylatharzen sind allgemein bekannt und vielfach beschrieben (vgl. z.B.: Houben-Weyl, Methoden der organischen Chemie, 4. Auflage, Band 14/1, Seite 24 bis 255 (1961)).

Die erfindungsgemäß eingesetzten Polyacrylatharze werden vorzugsweise mit Hilfe des Lösungspolymerisationsverfahrens hergestellt. Hierbei wird üblicherweise ein organisches Lösemittel bzw. Lösemittelgemisch vorgelegt und zum Sieden erhitzt. In dieses organische Lösemittel bzw. Lösemiltelgsmisch werden dann das zu polymerisierende Monomerengemisch sowie ein oder mehrere Polymerisationsinitiatoren kontinuierlich zugegeben. Die Polymerisation erfolgt bei Temperaturen zwischen 100 und 160°C, vorzugsweise zwischen 130 und 150°C. Als Polymerisationsinitiatoren werden vorzugsweise freie Radikale bildende Initiatoren eingesetzt. Initiatorart und -menge werden üblicherweise so gewählt, daß bei der Polymerisationstemperatur während der Zulaufphase ein möglichst konstantes Radikalangebot vorliegt.

Als Beispiele für einsetzbare Initiatoren werden genannt: Dialkylperoxide, wie Di-tert.-Butylperoxid, Dicumylperoxid; Hydroperoxide, wie Cumolhydroperoxid, tert.-Butylhydroperoxid; Perester, wie tert.-Butylperbenzoat, tert.-Butylperpivalat, tert.-Butylper-3,5,5-trimethylhexanoat, tert.-Butylper-2-ethylhexanoat.

Die Polymerisationsbedingungen (Reaktionstemperatur, Zulaufzeit der Monomerenmischung, Menge und Art der organischen Lösemittel und Polymerisationsinitiatoren, eventuelle Milverwendung von Molekulargewichtsreglem, wie z.B. Mercaptanen, Thiolglykolsäureestern und Chlorwasserstollen) werden so ausgewählt, daß die erfindungsgemäß eingesetzten Polyacrylatharze ein zahlenmittleres Molekulargewicht von 1.500 bis 10.000, vorzugsweise 2.000 bis 5.000 (bestimmt durch Gelpermeationschromatographie unter Verwendung von Polystyrol als Eichsubstanz) aufweisen.

Die Säurezahl der erfindungsgemäß eingesetzten Polyacrylatharze kann vom Fachmann durch Einsatz entsprechender Mengen der Komponente (c) eingestellt werden. Analoges gilt für die Einstellung der Hydroxylzahl. Sie ist über die Menge an eingesetzter Komponente (a) steuerbar.

Als Komponente (a) kann im Prinzip jeder hydroxylgruppenhaltige Ester der Acrylsäure oder Methacrylsäure oder ein Gemisch aus solchen Monomeren eingesetzt werden. Als Beispiele werden genannt: Hydroxyalkylester der Acrylsäure, wie z.B. Hydroxyethylacrylat, Hydroxypropylacrylat, Hydroxybutylacrylat, insbesondere 4-Hydroxybutylacrylat; Hydroxyalkylester der Methacrylsäure, wie z.B. Hydroxyethylmethacrylat, Hydroxypropylmethacrylat, Hydroxybutylmethacrylat, insbesondere 4-Hydroxybutylmethacrylat; Umsetzungsprodukte aus cyclischen Estern, wie z.B. e-Caprolacton und Hydroxyalkylestem der Acrylsäure bzw. Methacrylsäure:

Die Zusammensetzung der Komponente (a) wird vorzugsweise so ausgewählt, daß bei alleiniger Polymerisation der Komponente (a) ein Polyacrylatharz mit einer Glasübergangstemperatur von -50 bis +70, vorzugsweise -30 bis +50°C erhalten wird. Die Glasübergangslemperatur kann vom Fachmann unter Zuhilfenahme der Formel

$$T_G = \sum_{n=1}^{n=x} \frac{W_n}{T_{Gn}}$$

$T_G$ = Glasübergangstemperatur des Polymeren

x = Anzahl der verschiedenen einpolymerisierten Monomere,

$W_n$ = Gewichtsanteil des n-ten Monomers

$T_{Gn}$ = Glasübergangstemperatur des Homopolymers aus dem n-ten Monomer

näherungsweise berechnet werden.

Als Komponente (b) kann im Prinzip jeder von (a) verschiedene aliphatische oder cycloaliphatische Ester der Acrylsäure oder Methacrylsäure mit mindestens 4 C-Atomen im Alkoholrest oder ein Gemisch aus solchen Monomeren eingesetzt werden. Als Beispiele werden genannt: aliphatische Ester der Acryl- und Methacrylsäure mit 4 bis 20 C-Atomen im Alkoholrest, wie z.B. n-Butyl-, iso-Butyl-, tert.-Butyl, 2-Ethylhexyl-, Stearyl- und Laurylacrylat und -methacrylat sowie cycloaliphatische Ester der Acryl- und Methacrylsäure wie z. B. Cyclohexylacrylat und Cyclohexylmethacrylat. Die Zusammensetzung der Komponente (b) wird vorzugsweise so ausgewählt, daß bei alleiniger Polymerisation der Komponente (b) ein Polyacrylatharz mit einer Glasübergangstemperatur von 10 bis 100, vorzugsweise 20 bis 60°C erhalten wird.

Als Komonente (c) kann im Prinzip jede ethylenisch ungesättigte Carbonsäure oder eine Mischung aus ethylenisch ungesättigten Carbonsäuren eingesetzt werden. Als Komponente (c) werden vorzugsweise Acrylsäure und/oder Methacrylsäure eingesetzt.

Als Komponente (d) kann im Prinzip jedes von (a), (b) und (c) verschiedene ethylenisch ungesättigte Monomer oder ein Gemisch aus solchen Monomeren eingesetzt werden. Als Beispiele für Monomere, die als Komponente (d) eingesetzt werden können, werden genannt: vinylaromatische Kohlenwasserstoffe, wie Styrol, α-Alkylstyrol und Vinyltoluol, Amide der Acrylsäure und Methacrylsäure, wie z.B. Methacrylamid und Acrylamid; Nitrile der Methacrylsäure und Acrylsäure; Vinylether und Vinylester. Als Komponente (d) werden vorzugsweise vinylaromatische Kohlenwasserstoffe, insbesondere Styrol eingesetzt.

Die Zusammensetzung der Komponente (d) wird vorzugsweise so ausgewählt, daß bei alleiniger Polymerisation der Komponente (d) ein Harz mit einer Glasübergangstemperatur von 70 bis 120, vorzugsweise 80 bis 100°C erhalten wird.

Die in den erfindungsgemäßen nichtwäßrigen Lacken enthaltenen harnstoffgruppenhaltigen Thixotropierungsmittel sind bekannt und werden beispielsweise in der deutschen Offenlegungsschrift DE 23 59 929, in den deutschen Auslegeschriften DE 18 05 693 und DE 23 59 923 sowie in der deutschen Patentschrift DE 27 51 761 ausführlich beschrieben.

Die in den erfindungsgemäßen nichtwäßrigen Lakken eingesetzten harnstoffgruppenhaltigen Thixotropierungsmittel werden durch Umsetzung von Monoaminen oder Mischungen aus Monoaminen mit Polyisocyanaten oder Mischungen aus Polyisocyanaten hergestellt, wobei die Monoamine und die Polyisocyanate in solchen Mengen miteinander umgesetzt werden, daß das Äquivalentverhältnis zwischen Aminogruppen und Isocyanatgruppen zwischen 1,2 und 0,4, vorzugsweise zwischen 1,0 und 0,8 liegt. Als Monoamine werden aliphatische primäre Monoamine mit mindestens 6 C-Atomen im Molekül eingesetzt. Als Beispiele für einsetzbare Monoamine werden genannt: n-Hexylamin, n-Octylamin, iso-Nonanylamin, iso-Tridecylamin, n-Decylamin und Stearylamin.

Als Polyisocyanat wird Tetramethylen-1,4-diisocyanat, Hexamethylen-1,6-diisocyanat, ω,ω-Dipropylätherdiisocyanat, Cyclohexyl-1,4-diisocyanat, Dicyclohexylmethan-4,4'-diisocyanat, 1,5-Dimethyl-(2,4-ω-diisocyanato-methyl)-benzol, 1,5-Dimethyl-(2,4-ω-diisocyanato-ethyl)-benzol, 1,3,5-Trimethyl-(2,4-ω-diisocyanato-methyl)-benzol, 1,3,5-Triethyl-(2,4-ω-diisocyanato-methyl)-benzol, trimeres Hexamethylen-1,6-diisocyanat, Isophorondiisocyanat, Dicyclohexyldimethylmethan-4,4'-diisocyanat, 2,4-Toluoldiisocyanat, 2,6-Toluoldiisocyanat oder Diphenylmethan-4,4'-diisocyanat oder eine Mischung aus diesen Polyisocyanaten, vorzugsweise Hexamethylendiisocyanat, eingesetzt.

Das hamstoffgruppenhaltige Thixotropierungsmittel wird vorzugsweise in Gegenwart des erfindungsgemäß eingesetzten Polyacrylatharzes hergestellt. Dabei wird üblicherweise so vorgegangen, daß die Aminkomponente zu einer Lösung des Acrylatharzes in einem organischen Lösemittel bzw. in einem Gemisch aus organischen Lösemitteln gegeben wird und dann das Polyisocyanat möglichst schnell und unter sehr starkem Rühren zugegeben wird. Die so erhaltene Mischung aus hamstoffgruppenhaltigem Thixotriopierungsmittel und Polyacrylatharz kann dann in den erfindungsgemäßen nichtwäßrigen Lacken eingesetzt werden.

Die erfindungsgemäßen nichtwäßrigen Lacke enthalten 30 bis zu 70, vorzugsweise 40 bis 60 Gew.-% organische Lösemittel, wie z.B.: aliphatische, aromatische und cycloaliphatische Kohlenwasserstoffe, Alkylester der Essigsäure oder Propionsäure, Alkanole, Ketone sowie Glykolether und Glykoletherester.

Die erfindungsgemäßen nichtwäßrigen Lacke können neben den organischen Lösemitteln, dem Polyacrylatharz und dem harnstoffgruppenhaltigen Thixotropierungsmittel noch Vernetzungsmittel, weitere mit dem erfindungsgemäß eingesetzten Polyacrylatharz verträgliche Bindemittel, Pigmente, Füllstoffe, Lichtschutzmittel und weitere für Lacke typische Zusätze enthalten.

Es ist bevorzugt, daß die nichtwäßrigen Lacke 25 bis 100, vorzugsweise 30 bis 70 Gew.-%, bezogen auf den Feststoffgehalt an Polyacrylatharz, eines Vernetzungsmittels bzw. einer Mischung aus Vernetzungsmitteln enthalten. Als Beispiele für einsetzbare Vernetzungsmittel werden Aminoplastharze, insbesondere veretherte Melamin-Formaldehydkondensate sowie blockierte und unblockierte Polyisocyanate sowie Mischungen aus diesen Vemetzungsmitteln genannt. Das Vemetzungsmittel wird in einer solchen Menge zugegeben, daß das Äquivalentverhältnis zwischen den reaktiven Gruppen des Bindemittels und den reaktiven Gruppen des Vemetzungsmittels zwischen 1,5 zu 0,5 und 0,5 zu 1,5, vorzugsweise zwischen 1,2 zu 0,8 und 0,8 zu 1,2 liegt.

Die erfindungsgemäßen nichtwäßrigen Lacke enthalten das harnstoffgruppenhaltige Thixotropierungsmittel in einer Menge von 0,1 bis 30,0, vorzugsweise 0,5 bis 10, besonders bevorzugt 1,0 bis 5,0 Gew.-%, bezogen auf den Gesamtfeststoffgehalt der erfindungsgemäßen nichlwäßrigen Lacke.

Die erfindungsgemäßen nichtwäßrigen Lacke können mit Hilfe üblicher Applikationsmethoden, insbesondere durch Spritzen auf jedes beliebige Substrat, insbesondere auf Metalle, Holz, Kunststoff usw. appliziert werden.

Mit den erfindungsgemäßen nichtwäßrigen Lacken lassen sich Lackoberflächen mit so herausragenden Oberflächeneigenschaften herstellen, daß sie auch zur Lackierung von Automobilkarosserien, insbesondere als transparente Lacke bei der Herstellung von zweischichtigen Decklackierungen des Base coat/clear coat-Typs eingesetzt werden können. Zweischichtige Decklackierungen des Base coat/clear coat-Typs werden hergestellt, indem

(1) ein pigmentierter Basislack auf die Substratoberfläche aufgebracht wird

(2) der in Stufe (1) aufgebrachte Basislackfilm bei Temperaturen von Raumtemperatur bis 80°C getrocknet wird

(3) auf den in Stufe (2) getrockneten Basislackfilm ein transparenter Decklack aufgebracht wird und anschließend

(4) Basislackschicht und Decklackschicht zusammen eingebrannt werden.

Die folgenden Beispiele erläutern die Erfindung. Alle Angaben, in Teilen oder Prozenten, sind, sofern nichts anderes angegeben, als Gewichtsangaben zu verstehen.

**Beispiel 1: Herstellung einer Polyacrylatharzlösung**

In einem Stahlkessel ausgestattet mit Monomerzulauf, Initialorzulauf, Thermometer, Ölheizung und Rückflußkühler werden 878 Teile eines handelsüblichen aromatischen Lösemittels mit einem Siedebereich von 158°C bis 172°C vorgelegt und auf 140°C aufgeheizt. Dann wird eine Mischung α aus 87 Teilen des aromatischen Lösemittelgemisches und 87 Teilen t-Butylperoctoat in einer solchen Geschwindigkeit unter Rühren zugegeben, daß die Zugabe der Mischung α nach 4,75 h abgeschlossen ist. 15 min nach Beginn der Zugabe der Mischung α wird eine Mischung β bestehend aus 630 Teilen t-Butylacrylat, 217 Teilen n-Butylmethacrylat, 72 Teilen 1-Butylmethacrylat, 116 Teilen Styrol, 326 Teilen Hydroxypropylmethacrylat und 87 Teilen Butandiol-1,4-monoacrylat in einer solchen Geschwindigkeit zu der Reaktionsmischung gegeben, daß die Zugabe der Mischung β nach 4 h abgeschlossen ist. Nach Abschluß der Zugabe der Mischung α wird das Reaklionsgemisch noch 2 h auf 140°C gehalten und anschließend auf Raumtemperatur abgekühlt. Die erhaltene Acrylatharzlösung weist einen Feststoffgehalt von 62,3% (1 h, 130°C; Umlultofen), eine Viskosität von 7,2 dPas (ICI-Platte/Kegel-Viskosimeter, 23°C), eine Säurezahl von 4,9 und eine Hydroxylzahl von 111, jeweils bezogen auf den Feslstoffgehalt, auf.

**Beispiel 2: Herstellung einer Thixotroplerungsmittel enthaltenden Polyacrylatharzlösung**

In den 2,5 1-Rührbehälter eines Dissolvers mit einer Dissolverscheibe des Durchmessers von 90 mm werden 1850 g der in Beispiel 1 beschriebenen Acrylatharzlösung, 130 g n-Butylacetat und 61 g n-Hexylamin in der angegebenen Reihenfolge eingewogen. In ein Vorlagegefäß werden 130 g n-Butylacetat und 50 g Hexamethylendiisocyanat eingewogen und vorgemischt. Es wird bei 1400 U/min. dissolvert und der Inhalt der Vorlage innerhalb von 10 min. gleichmäßig in den Rührbehälter dosiert. Danach wird weitere 20 min. bei 1400 U/min. dissolvert. Es entsteht eine thixotrope Dispersion mit einem nichtflüchtigen Anteil von 50 % davon 5 % Harnstoffteilchen.

**Beispiel 3: Herstellung eines transparenten Decklackes**

In ein 2 1-Rührgeläß werden in der angegebenen Reihenfolge eingewogen und durch Rühren vermischt: 523,5 g der in Beispiel 1 beschriebenen Acrylatharzlösung, 360,0 g der in Beispiel 2 beschriebenen thixotropen Dispersion, 342,0 g eines handelsüblichen, butanolveretherten, iminogruppenhaltigen Melaminformaldehydharzes, 80 %-ig gelöst in n-Butanol, 18,0 g eines handelsüblichen UV-Absorbers auf Basis eines Benztriazolderivates, gelöst in 45 g Xylol, 15,0 g eines handelsüblichen Radikalfängers auf Basis eines sterisch gehinderten Piperidinderivates, gelöst in 30 g Xylol, 15,0 g einer 1 %-igen Lösung eines handelsüblichen modifizierten Polysiloxans als Verlaufsmittel, 60,0 g n-Butanol und 91,5 g des in Beispiel 1 beschriebenen aromatischen Lösemittels.

Der so hergestellte transparente Decklack hat einen nichtflüchtigen Anteil von 52,0 % und eine Viskosität von 43 sec., gemessen im Auslaufbecher nach DIN-4 bei 20°C.

**Beispiel 4: Herstellung einer zweischichtigen Decklackierung des basecoat/clearcoat Typs**

Auf handelsübliche mit Zinkphosphat passivierte Karosseriebleche, - z.T. mit einer Lochreihe (Löcher mit 1 cm Durchmesser) - beschichtet mit 23 μm einer handelsüblichen kalionischen Elektrotauchlackierung und 35 μm eines handelsüblichen grauen Einbrennfüllers werden mit einer pneumatischen Hochleistungsspritzpistole in zwei Aufträgen 14 μm (gemessen als Trockenfilm) eines handelsüblichen wäßrigen silberfarbenen Matallicbasislacks aufgebracht. Die Bleche werden 5 min. in einem Umluftofen bei 80°C vorgetrocknet und auf 40°C abgekühlt. Dann wird der in Beispiel 3 beschriebene transparente Decklack, der mit einer Mischung aus 60 % Xylol und 40 % n-Butylacelat auf eine Viskosität von 28 sec., gemessen im Auslaufbecher nach DIN-4 bei 20°C, eingestellt wurde, mit der genannten Spritzpistole in zwei Spritzgängen so appliziert, daß Trockenfilmschichtdicken von 20 bis 65 μm entstehen. Zusätzlich werden Bleche mit einer Trockenfilmschichtdicke des transparenten Decklackes von 42 μm hergestellt.

Die Bleche werden 8 Minuten bei Raumtemperatur vorgetrocknet. Dann wird ein Teil der Bleche in vertikaler Stellung (75°) und die übrigen Bleche liegend in einem Umluftofen für 20 Minuten bei 140°C eingebrannt. Nach Abkühlung werden die Lackierungen beurteilt.

Die vertikal getrockneten Lochbleche zeigen bis zu Schichtdicken von 57 μm an den Löchern keine Läufer die länger als 0,5 cm sind.

Der metallische Effekt, gemessen durch Reflektionsmessung von Licht mit einem Goniophotometer in Aufsicht und Schrägsicht, unterscheidet sich in Abhängigkeit von der Schichtdicke und im Vergleich der horizontal und vertikal eingebrannten Tafeln um weniger als 4%.

Der Glanz der Lackierungen, gemessen im Winkel von 20°, ist bei allen Tafeln und Schichtdicken größer als 89 %.

Der Verlauf der transparenten Decklackschichten über der Metallic-Basislack-Schicht, gemessen als DOI (Abbildungsschärfe, Gerät nach NISSAN) unterscheidet sich in Abhängigkeit von der Schichtdicke und im Vergleich der horizontal und vertikal eingebrannten Tafeln um weniger als 8 %.

## Patentansprüche

1. Nichtwäßriger Lack, enthaltend ein Polyacrylatharz und ein hamstoffgruppenhaltiges Thixotropierungsmittel, das durch Umsetzung eines Monoamins oder einer Mischung aus Monoaminen mit einem Polyisocyanat oder einer Mischung aus Polyisocyanaten herstellbar ist, wobei das Monoamin und das Polyisocyanat bzw. die Mischung aus Polyisocyanaten in einer solchen Menge miteinander umgesetzt werden, daß das Äquivalentverhältnis zwischen Aminogruppen und Isocyanatgruppen zwischen 1,2 und 0,4 liegt und als Polyisocyanat Tetramethylen-1,4-diisocyanat, Hexamethylen-1,6-diisocyanat, ω,ω-Dipropylätherdiisocyanat, Cyclohexyl-1,4-diisocyanat, Dicyclohexylmethan-4,4'-diisocyanat, 1,5-Dimethyl-(2,4-ω-diisocyanato-methyl)-benzol, 1,5-Dimethyl-(2,4-ω-diisocyanato-ethyl)-benzol, 1,3,5-Trimethyl-(2,4-ω-diisocyanato-methyl)-benzol, 1,3,5-Triethyl- (2,4-ω-diisocyanato-methyl)-benzol, trimeres Hexamethylen-1,6-diisocyanat, Isophorondiisocyanat, Dicyclohexyldimethylmethan-4,4'-diisocyanat, 2,4-Toluoldiisocyanat, 2,6-Toluoldiisocyanat oder Diphenylmethan-4,4'-diisocyanat oder eine Mischung aus diesen Polyisocyanaten eingesetzt wird und wobei als Monoamine aliphatische primäre Monoamine mit mindestens 6 C-Atomen im Molekül eingesetzt werden und wobei das Polyacrylatharz herstellbar ist, indem

    (a) 16 bis 51 Gew.-% eines hydroxylgruppenhaltigen Esters der Acrylsäure oder Methacrylsäure oder eines Gemisches aus solchen Monomeren

    (b) 32 bis 84 Gew.-% eines von (a) verschiedenen aliphatischen oder cycloaliphatischen Esters der Acrylsäure oder Methacrylsäure mit mindestens 4 C-Atomen im Alkoholrest oder eines Gemisches aus solchen Monomeren,

    (c) 0 bis 2 Gew.-% einer ethylenisch ungesättigten Carbonsäure oder einer Mischung aus ethylenisch ungesättigten Carbonsäuren und

    (d) 0 bis 30 Gew.-% eines von (a), (b) und (c) verschiedenen ethylenisch ungesättigten Monomeren oder eines Gemisches aus solchen Monomeren

    zu einem Polyacrylatharz mit einer Säurezahl von 0 bis 15, einer Hydroxylzahl von 80 bis 140 und einem zahlenmittleren Molekulargewicht von 1.500 bis 10.000 polymerisiert werden, wobei die Summe der Gewichtsanteile der Komponenten (a), (b), (c) und (d) stets 100 Gew.-% ergibt.

2. Nichtwäßriger Lack nach Anspruch 1, **dadurch gekennzeichnet, daß** die Zusammensetzung der Komponente (a) so ausgewählt wird, daß bei alleiniger Polymerisation der Komponente (a) ein Polyacrylatharz mit einer Glasübergangstemperatur von -50 bis +70, vorzugsweise-30 bis +50°C erhalten wird.

3. Nichtwäßriger Lack nach Anspruch 1 oder 2, **dadurch gekennzeichnet, daß** die Zusammensetzung der Komponente (b) so ausgewählt wird, daß bei alleiniger Polymerisation der Komponente (b) ein Polyacrylatharz mit einer Glasübergangstemperatur von 10 bis 100, vorzugsweise 20 bis 60°C erhalten wird.

4. Nichtwäßriger Lack nach einem der Ansprüche 1 bis 3, **dadurch gekennzeichnet, daß** die Zusammensetzung der Komponente (d) so ausgewählt wird, daß bei alleiniger Polymerisation der Komponente (d) ein Harz mit einer Glasübergangstemperatur von 70 bis 120, vorzugsweise 80 bis 100°C erhalten wird.

5. Nichtwäßriger Lack nach einem der Ansprüche 1 bis 4, **dadurch gekennzeichnet, daß** das Polyacrylatharz herstellbar ist, indem 16 bis 28 Gew.-% der Komponente (a), 32 bis 63 Gew.-% der Komponente (b), 0 bis 1 Gew.-% der Komponente (c) und 0 bis 20 Gew.-% der Komponente (d) zu einem Polyacrylatharz mit einer Säurezahl von 0 bis 15, vorzugsweise 0 bis 8, einer Hydroxylzahl von 80 bis 140, vorzugsweise 80 bis 120 und einem zahlenmittleren Molekulargewicht von 1.500 bis 10.000. vorzugsweise 2.000 bis 5.000 polymerisiert werden.

6. Verfahren zur Herstellung einer zweischichtigen Decklackierung auf einer Substratoberfläche bei dem

    (1) ein pigmentierter Basislack auf die Substratoberfläche aufgebracht wird

    (2) der in Stufe (1) aufgebrachte Basislackfilm bei Temperaturen von Raumtemperatur bis 80°C getrocknet wird

    (3) auf den in Stufe (2) getrockneten Basislackfilm ein transparenter Decklack aufgebracht wird und anschließend

    (4) Basislackschicht und Decklackschicht zusammen eingebrannt werden,

    **dadurch gekennzeichnet, daß** in Stufe (3) ein nichtwäßnger Lack nach einem der Ansprüche 1 bis als transparenter Decklack aufgebracht wird.

## Claims

1. Nonaqueous coating material comprising a polyacrylate resin and a urea group-containing thixotropic agent which can be prepared by reacting a monoamine or a mixture of monoamines with a polyisocyanate or a mixture of polyisocyanates, the monoamine and the polyisocyanate, or the mixture of polyisocyanates, being reacted with one another in an amount such that the ratio of equivalents between amino groups and isocyanate groups lies between 1.2 and 0.4 and the polyisocyanate employed is tetramethylene 1,4-diisocyanate, hexamethylene 1,6-diisocyanate, ω,ω-dipropyl ether diisocyanate, cyclohexyl 1,4-diisocyanate, dicyclohexylmethane 4,4'-diisocyanate, 1,5-dimethyl(2,4-ω-diisocyanato-methyl)benzene, 1, 5-dimethyl(2,4-ω-diisocyanato-ethyl)benzene, 1,3,5-trimethyl(2,4-ω-diisocyanato-methyl)benzene, 1,3,5-triethyl (2,4-ω-diisocyanato-methyl)benzene, trimeric hexamethylene 1,6-diisocyanate, isophorone diisocyanate, dicyclohexyldimethylmethane 4,4'-diisocyanate, 2,4-toluene diisocyanate, 2,6-toluene diisocyanate or diphenylmethane 4,4'-diisocyanate, or a mixture of these polyisocyanates, and where aliphatic primary monoamines having at least 6 carbon atoms in the molecule are used as monoamines, and where the polyacrylate resin can be prepared by polymerizing

   (a) from 16 to 51 % by weight of a hydroxyl-containing ester of acrylic acid or methacrylic acid or of a mixture of such monomers

   (b) from 32 to 84 % by weight of an aliphatic or cycloaliphatic ester of acrylic acid or methacrylic acid which is different from (a) and has at least 4 carbon atoms in the alcohol radical or of a mixture of such monomers,

   (c) from 0 to 2 % by weight of an ethylenically unsaturated carboxylic acid or of a mixture of ethylenically unsaturated carboxylic acids, and

   (d) from 0 to 30 % by weight of an ethylenically unsaturated monomer which is different from (a), (b) and (c) or of a mixture of such monomers

   to give a polyacrylate resin having an acid number of from 0 to 15, a hydroxyl number of from 80 to 140, and a number-average molecular weight of from 1,500 to 10,000, the sum of the proportions by weight of components (a), (b), (c) and (d) always being 100 % by weight.

2. Nonaqueous coating material according to Claim 1, **characterized in that** the composition of component (a) is selected such that the polyacrylate resin resulting from polymerization of component (a) alone has a glass transition temperature of from -50 to +70, preferably from -30 to +50°C.

3. Nonaqueous coating material according to Claim 1 or 2, **characterized in that** the composition of component (b) is selected such that the polyacrylate resin resulting from polymerization of component (b) alone has a glass transition temperature of from 10 to 100, preferably from 20 to 60°C.

4. Nonaqueous coating material according to one of Claims 1 to 3, **characterized in that** the composition of component (d) is selected such that the resin resulting from polymerization of component (d) alone has a glass transition temperature of from 70 to 120, preferably from 80 to 100°C.

5. Nonaqueous coating material according to one of Claims 1 to 4, **characterized in that** the polyacrylate resin can be prepared by polymerizing from 16 to 28 % by weight of component (a), from 32 to 63 % by weight of component (b), from 0 to 1 % by weight of component (c) and from 0 to 20 % by weight of component (d) to give a polyacrylate resin having an acid number of from 0 to 15, preferably from 0 to 8, a hydroxyl number of from 80 to 140, preferably from 80 to 120, and a number-average molecular weight of from 1,500 to 10,000, preferably from 2,000 to 5,000.

6. Process for producing a two-coat finish on a substrate surface, in which

   (1) a pigmented basecoat is applied to the substrate surface

   (2) the basecoat film applied in step (1) is dried at temperatures from room temperature to 80°C

   (3) a transparent topcoat is applied to the basecoat film dried in step (2), and subsequently

   (4) the basecoat and topcoat are baked together,

   **characterized in that** in step (3) a nonaqueous coating material according to one of Claims 1 to 5 is applied as transparent topcoat.

## Revendications

1. Matériau de revêtement non aqueux comprenant une résine de polyacrylate et un agent thixotrope renfermant des groupes urée, pouvant être préparé par réaction d'une monoamine ou d'un mélange de monoamines avec un polyisocyanate ou un mélange de polyisocyanates, où la monoamine et le polyisocyanate ou le mélange de polyisocyanates sont mis à réagir les uns avec les autres en une quantité telle que le rapport d'équivalents entre les groupes amino et les groupes isocyanate soit compris entre 1,2 et 0,4 et le polyisocyanate utilisé est le tétraméthylène-1,4-diisocyanate, l'hexaméthylène-1,6-diisocyanate, le ω,ω-dipropyléther-diisocyanate, le cyclohexyl-1,4-diisocyanate, le dicyclohexylméthane-4,4'-diisocyanate, le 1,5-diméthyl(2,4-ω-diisocyanatométhyl)benzène, le 1,5-diméthyl(2,4-ω-diisocyanatoéthyl)benzène, le 1,3,5-triméthyl(2,4-ω-diisocyanatométhyl)benzène, le 1,3,5-triéthyl(2,4-ω-diisocyanatométhyl)benzène, l'hexaméthylène-1,6-diisocyanate trimère, l'isophoronediisocyanate, le dicyclohexyldiméthylméthane-4,4'-diisocyanate, le 2,4-toluènediisocyanate, le 2,6-toluènediisocyanate ou le diphénylméthane-4,4'-diisocyanate, ou un mélange de ces polyisocyanates et où les monoamines utilisées sont des monoamines primaires aliphatiques ayant au moins 6 atomes de carbone dans la molécule, et où la résine de polyacrylate peut être préparée en polymérisant :

(a) de 16 à 51 % en poids d'un ester hydroxylé de l'acide acrylique ou de l'acide méthacrylique ou d'un mélange de tels monomères,

(b) de 32 à 84 % en poids d'un ester aliphatique ou cycloaliphatique de l'acide acrylique ou de l'acide méthacrylique, différent de (a), ayant au moins 4 atomes de carbone dans le radical alcool, ou d'un mélange de tels monomères,

(c) de 0 à 2 % en poids d'un acide carboxylique éthyléniquement insaturé ou d'un mélange d'acides carboxyliques éthyléniquement insaturés, et

(d) de 0 à 30 % en poids d'un monomère éthyléniquement insaturé différent de (a), (b) et (c) ou d'un mélange de tels monomères,

pour donner lieu à une résine de polyacrylate ayant un indice d'acide de 0 à 15, un indice d'hydroxyle de 80 à 140 et un poids moléculaire moyen en nombre de 1500 à 10000, la somme des proportions pondérales des composants (a), (b), (c) et (d) étant toujours de 100 % en poids.

2. Matériau de revêtement non aqueux selon la revendication 1, **caractérisé en ce que** la composition du composant (a) est choisie de telle sorte que lors de la polymérisation du composant (b) seul, on obtienne une résine de polyacrylate ayant une température de transition vitreuse de -50 à +70, de préférence de -30 à +50°C.

3. Matériau de revêtement non aqueux selon la revendication 1 ou 2, **caractérisé en ce que** la composition du composant (b) est choisie de telle sorte que lors de la polymérisation du composant (b) seul, on obtienne une résine de polyacrylate ayant une température de transition vitreuse de 10 à 100, de préférence de 20 à 60°C.

4. Matériau de revêtement non aqueux selon l'une quelconque des revendications 1 à 3, **caractérisé en ce que** la composition du composant (d) est choisie de telle sorte que lors de la polymérisation du composant (d) seul, on obtienne une résine ayant une température de transition vitreuse de 70 à 120, de préférence de 80 à 100°C.

5. Matériau de revêtement non aqueux selon l'une quelconque des revendications 1 à 4, **caractérisé en ce que** la résine de polyacrylate peut être préparée en polymérisant de 16 à 28 % en poids du composant (a), de 32 à 63 % en poids du composant (b), de 0 à 1 % en poids du composant (c) et de 0 à 20 % en poids du composant (d) pour donner lieu à une résine de polyacrylate ayant un indice d'acide de 0 à 15, de préférence de 0 à 8, un indice d'hydroxyle de 80 à 140, de préférence de 80 à 120, et un poids moléculaire moyen en nombre de 1 500 à 10 000, de préférence de 2 000 à 5 000.

6. Procédé de production d'un revêtement de finition bicouche sur une surface de substrat, dans lequel

(1) une couche de fond pigmentée est appliquée sur la surface de substrat,

(2) le film de couche de fond appliqué à l'étape (1) est séché à des températures allant de la température ambiante jusqu'à 80°C,

(3) une couche de finition transparente est appliquée sur le film de couche de fond séché à l'étape (2), et ensuite

(4) la couche de fond et la couche de finition sont cuites conjointement,

**caractérisé en ce que** dans l'étape (3), un matériau de revêtement non aqueux selon l'une quelconque des revendications 1 à 5 est appliqué en tant que couche de finition.